# EUROPÄISCHE PATENTANMELDUNG

(11) **EP 1 566 119 A1**
(43) Veröffentlichungstag der Anmeldung: **24.08.2005**
(21) Anmeldenummer: 05001158.4
(22) Anmeldetag: 21.01.2005
(51) Int. Cl.: A47C 7/46, B60N 2/66

(54) **Lordosenstütze**

(30) Priorität: 19.02.2004 DE 202004002569 U
(71) Anmelder: Schwarzbich, Jörg, 33615 Bielefeld (DE)
(72) Erfinder: Schwarzbich, Jörg, 33615 Bielefeld (DE)
(74) Vertreter: TER MEER - STEINMEISTER & PARTNER GbR

(57) **Zusammenfassung**

Lordosenstütze mit einer wölbbaren Platte (10) und einer Stelleinrichtung (28; 36; 50; 52) zum Verstellen der Wölbung der Platte (10), dadurch gekennzeichnet, dass die Platte (10) elastisch in eine gewölbte Stellung vorgespannt ist und dass die Stelleinrichtung (28; 36; 50; 52) dazu ausgebildet ist, die Wölbung der Platte (10) zu verringern.

## Beschreibung

Die Erfindung betrifft eine Lordosenstütze mit einer wölbbaren Platte und einer Stelleinrichtung zum Verstellen der Wölbung der Platte.

Lordosenstützen werden häufig in die Rückenlehnen von Kraftfahrzeugsitzen eingebaut, insbesondere von Fahrersitzen, und dienen dazu, die Kontur der Rückenlehne besser an die Anatomie des Fahrers anzupassen, so dass das Rückgrat des Fahrers insbesondere im Bereich der Lendenwirbel optimal unterstützt wird. Je stärker die Platte gewölbt ist, desto prägnanter ist die Abstützung im Lendenwirbelbereich.

Bei einer bekannten Lordosenstütze der eingangs genannten Art, wie sie zum Beispiel in EP-A-0 485 483 beschrieben wird, ist die aus Kunststoff bestehende wölbbare Platte mit ihren oberen und unteren Rändern an biegsamen horizontalen Drähten eines Drahtgitters befestigt, das elastisch im Gestell der Rückenlehne aufgehängt ist. Die Stelleinrichtung wird durch einen mit Hilfe eines Spannschlosses betätigbaren Bowdenzug gebildet, mit dem sich die oberen und unteren Ränder der Platte stärker zusammenziehen lassen, so dass die Platte sich stärker durchwölbt. Diese Konstruktion hat den Nachteil, dass die Stellkraft, die mit Hilfe des Spannschlosses erzeugt werden muss, einen nichtlinearen Kraftverlauf hat. Wenn die Platte bereits relativ stark gewölbt ist, so verhält sie sich relativ flexibel, so dass zum weiteren Zusammenziehen der oberen und unteren Ränder nur eine verhältnismäßig geringe Kraft benötigt wird. Wenn die Platte dagegen auf eine minimale Wölbung eingestellt ist, so ist zum Vergrößern der Wölbung eine wesentlich größere Kraft erforderlich. Dies ist insbesondere dann von Nachteil, wenn die Betätigung des Spannschlosses nicht von Hand, sondern mit Hilfe eines Motors erfolgen soll, da dann der Motor für eine entsprechend hohe Kraft ausgelegt werden muss.

Ein weiterer Nachteil der bekannten Konstruktion besteht darin, dass die Platte sich relativ starr verhält, wenn sie mit Hilfe des Bowdenzuges in einer bestimmten Wölbstellung fixiert wurde. Wenn der Fahrer mit dem Rücken einen Druck auf die Platte ausübt, kann deshalb die Platte kaum nachgeben, mit der Folge, dass der Fahrer einen entsprechend höhen Druck im Rücken spürt, was bei längerer Fahrt oft als unangenehm empfunden wird.

Wenn die Rückenlehne zurückgeklappt wird und - etwa beim Beladen des Fahrzeugs - ein sehr hoher Druck auf die gewölbte Lordosenstütze ausgeübt wird, können die resultierenden, auf die Stelleinrichtung übertragenen Kräfte so große werden, dass es zum Reißen von Zugseilen oder zu ähnlichen Beschädigungen kommt.

Aufgabe der Erfindung ist es, eine Lordosenstütze zu schaffen, die einen erhöhten Sitzkomfort bietet.

Diese Aufgabe wird erfindungsgemäß dadurch gelöst, dass die Platte elastisch in eine gewölbte Stellung vorgespannt ist und dass die Stelleinrichtung dazu ausgebildet ist, die Wölbung der Platte zu verringern.

Bei der erfindungsgemäßen Lordosenstütze wirken somit die Kraft, die vom Rücken des Benutzers auf die gewölbte Platte ausgeübt wird, und die Kraft der Stelleinrichtung in der gleichen Richtung, nämlich im Sinne einer Verringerung der Wölbung. Somit kann die Platte elastisch nachgeben, wenn sie durch den Rücken des Benutzers stärker belastet wird. Auf diese Weise wird ein höherer Sitzkomfort erreicht.

Vorteilhafte Ausgestaltungen und Weiterbildungen der Erfindung ergeben sich aus den Unteransprüchen.

In einer bevorzugten Ausführungsform ist die Stelleinrichtung so ausgebildet, dass sie die oberen und unteren Ränder der Platte entgegen der elastischen Vorspannung in entgegengesetzte Richtungen auseinander zieht. Die elastische Vorspannung der Platte in die maximal gewölbte Stellung kann dann zum Beispiel mit Hilfe einer oder mehrerer Zugfedern erreicht werden, die an den oberen und unteren Rändern der Platte verankert sind, so dass sie die Tendenz haben, die oberen und unteren Ränder zusammenzuziehen. Die Kraft der Stelleinrichtung braucht dann nur so groß zu sein, dass sie die Zugspannung der Federn überwindet.

Wenn die Platte durch eine eigenelastische Platte aus Kunststoff gebildet wird, die im unbelasteten Zustand, ohne die Kraft der Federn, eine weitgehend gestreckte, wenig gewölbte Position einnimmt, so wirkt die Eigenelastizität der Platte im Sinne einer Unterstützung der Stelleinrichtung. Wenn die Platte im Anfangszustand stark gewölbt ist und mit Hilfe der Stelleinrichtung die Wölbung verringert werden soll, so sind die Zugfedern nur wenig ausgezogen, und die Stelleinrichtung braucht nur die dann verhältnismäßig kleine Zugkraft der Federn zu überwinden. Wenn sich die Platte ihrer gestreckten Lage annähert, werden zwar die Zugfedern stärker ausgezogen, doch wird ein zunehmend größerer Anteil der Kraft der Zugfedern dadurch kompensiert, dass die Platte zunehmend auf Druck und weniger auf Biegung beansprucht ist. Insgesamt braucht so mit Hilfe der Stelleinrichtung über den gesamten Verstellbereich nur eine annähernd gleichbleibende, relativ niedrige Kraft aufgewandt zu werden.

In einer anderen Ausführungsform ist es auch möglich, die Platte so zu gestalten, dass sie im unbelasteten Zustand bereits eine gewisse Wölbung aufweist. In diesem Fall können die Zugfedern entsprechend schwächer ausgelegt werden. Durch geeignete Abstimmung der Kraft der Zugfedern und der Eigenelastizität der Platte lässt sich dann ein weitgehend konstanter Kraftverlauf erreichen.

In einer weiteren Ausführungsform ist es auch möglich, die Platte so stark vorzuwölben, dass sie im unbelasteten Zustand bereits die maximale Wölbung einnimmt. Für diese Ausführungsform kann auf die Zugfedern ganz verzichtet werden.

Die Vorwölbung der Platte kann durch entsprechende Formgebung der Platte selbst oder auch durch eingelegte oder eingeformte gewölbte Blattfedern erreicht werden.

Statt mit der Stelleinrichtung die oberen und unteren Ränder der Platte auseinander zu ziehen, ist es in einer anderen Ausführungsform auch möglich, die Stelleinrichtung mit einer im Wesentlichen senkrecht zur Ebene der Platte gerichteten Stellkraft auf den Wölbscheitel der Platte einwirken zu lassen. Bei dieser Ausführungsform wird die Platte durch die Stelleinrichtung vorwiegend auf Biegung und kaum auf Zug oder Druck beansprucht, so dass die maximal erforderliche Stellkraft relativ gering ist.

Bei allen beschriebenen Ausführungsformen ergibt sich insbesondere bei Handbetätigung der Stelleinrichtung zusätzlich der Vorteil, dass der Benutzer den Verstellvorgang in Richtung geringerer Wölbung unterstützen kann, indem er mit dem Rücken einen Druck auf die gewölbte Platte ausübt.

Wenn die Stelleinrichtung so ausgebildet ist, dass sie die oberen und unteren Ränder der Platte auseinander zieht, so kann einer der beiden Plattenränder ortsfest gehalten werden, während die Stelleinrichtung nur auf den anderen Rand wirkt. Alternativ ist es jedoch auch möglich, die Stelleinrichtung sowohl auf den oberen als auf den unteren Rand der Platte wirken zu lassen. Dadurch lässt sich erreichen, dass der Wölbscheitel bei der Wölbungsverstellung stets in der gleichen Höhe bleibt. Wahlweise kann die Stelleinrichtung auch so ausgebildet sein, dass die oberen und unteren Plattenränder unabhängig voneinander sowohl nach oben als auch nach unten verstellt werden können. Auf diese Weise lässt sich die auch Höhe der Platte in der Rückenlehne und damit die Höhe des Wölbscheitels nach Bedarf anpassen.

Für die Ausführungsform, bei der die oberen und unteren Ränder der Platte durch eine Schraubenfeder zusammengezogen werden, ist gemäß einer Weiterbildung der Erfindung eine besondere Stelleinrichtung vorgesehen, die einen sehr kompakten Aufbau aufweist und es ermöglicht, unmittelbar die Zugspannung der Schraubenfeder zu variieren. Diese Stelleinrichtung weist eine Schraube oder eine Spindel mit einer schraubenförmig verlaufenden Nut auf, die axial in die Schraubenfeder eingeschraubt wird, so dass der Federdraht in der Nut der Spindel liegt. Die Steigung der Nut der Spindel ist jedoch von der Steigung der Schraubenfeder im unbelasteten Zustand verschieden. Wenn die Steigung der Nut größer ist als die der Schraubenfeder, so wird die Schraubenfeder dort, wo die Spindel eingeschraubt ist, gedehnt. Je weiter die Spindel in die Schraubenfeder eingeschraubt wird, desto größer ist der gedehnte Abschnitt der Feder, und desto länger ist die Feder im unbelasteten Zustand, und desto geringer ist dementsprechend die Federkraft bei der Verwendung als Zugfeder. Wenn umgekehrt die Steigung der Nut der Spindel kleiner ist als die Steigung der Schraubenfeder, so wird die Schraubenfeder zusammengezogen, und bei der Verwendung als Zugfeder nimmt die Federkraft ab, wenn die Spindel weiter herausgeschraubt wird.

Die Verstellung erfolgt bei dieser Verstelleinrichtung also durch die Ein- und Ausschraubbewegung der Spindel, das heißt, im Wesentlichen durch eine Drehung der Spindel. Bei einer motorbetriebenen Stelleinrichtung ergibt sich daraus die vorteilhafte Möglichkeit, für den Drehantrieb der Spindel einen hochdrehenden Motor ohne Getriebeuntersetzung zu verwenden. Die Untersetzung erfolgt dann unmittelbar durch den Schraubeneingriff zwischen der Spindel und der Feder.

Die gemäß dieser Weiterbildung vorgeschlagene Vorrichtung zum Verstellen der Federkraft oder der natürlichen Länge einer Schraubenfeder lässt sich auch unabhängig von dem hier betrachteten Anwendungsfall überall dort mit Vorteil einsetzen, wo die Charakteristik einer Schraubenfeder mit Hilfe einer Stelleinrichtung verändert werden soll.

Im Folgenden werden Ausführungsbeispiele der Erfindung anhand der Zeichnung näher erläutert.

### Es zeigen:

- Figur 1: eine Lordosenstütze in einer Rückansicht;
- Figur 2: die Lordosenstütze nach Figur 1 in einer Seitenansicht;
- Figuren 3 und 4: Ansichten der Lordosenstütze entsprechend Figuren 1 und 2 für einen anderen Einstellzustand;
- Figuren 5 und 6: Seitenansichten einer Lordosenstütze gemäß einer anderen Ausführungsform in unterschiedlichen Stellungen;
- Figur 7: eine Seitenansicht einer Lordosenstütze gemäß einer weiteren Ausführungsform; und
- Figuren 8 und 9: Schnittdarstellungen eines Mechanismus zum Verändern der Charakteristik einer Schraubenfeder.

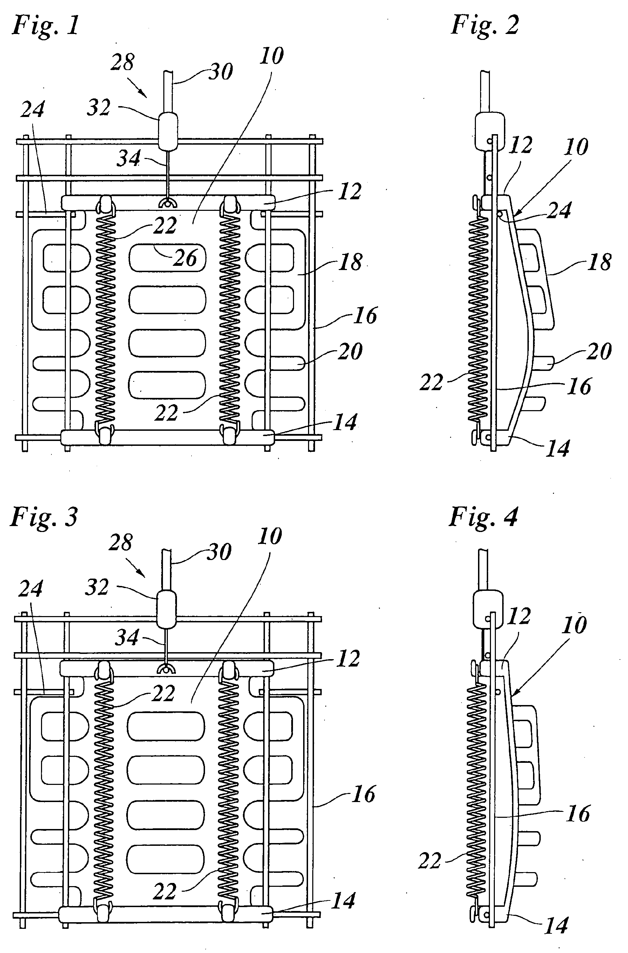

Die in Figur 1 gezeigte Lordosenstütze weist eine durch ein Kunststoff-Spritzteil gebildete wölbbare Platte 10 auf, die mit verdickten oberen und unteren Rändern 12, 14 an einem Drahtgitter 16 gehalten ist. Das Drahtgitter 16 ist in bekannter Weise in einem nicht gezeigten Gestell einer Rückenlehne eines Kraftfahrzeugsitzes aufgehängt, so dass die Platte 10 dem Rücken des Benutzers zugewandt ist. Diese Platte ist, wie Figur 2 zeigt, im mittleren Bereich leicht vorgewölbt, um den Lendenwirbelbereich des Benutzers geeignet abzustützen. Die Platte 10 weist seitliche Fortsätze 18, 20 auf, die, wie Figur 2 zeigt, leicht nach vorn angewinkelt sind, so dass die Platte insgesamt eine korbartige, der Rückenanatomie des Benutzers angepasste Struktur hat.

Der untere Rand 14 der Platte 10 ist, beispielsweise durch Verclipsung, ortsfest am Drahtgitter 16 gehalten, während im gezeigten Beispiel der obere Rand 12 innerhalb eines begrenzten Bereiches verschiebbar auf zwei vertikalen Gitterstäben geführt ist. An den verdickten oberen und unteren Rändern 12, 14 der Platte 10 sind auf der Seite des Drahtgitters 16, die von dem Hauptteil der Platte 10 abgewandt ist, zwei Schraubenfedern 22 eingehängt, die als Zugfedern wirken und die oberen und unteren Ränder der Platte 10 zusammenziehen. Auf diese Weise wird die in Figur 2 erkennbare Wölbung der Platte 10 bewirkt. In Figur 2 ist die maximale Wölbung erreicht, da der obere Rand 12 an waagerechten Stäben 24 des Drahtgitters anstößt. Die verdickten, zur Rückseite vorspringenden oberen und unteren Ränder 12, 14 der Platte üben eine gewisse Hebelwirkung aus, durch die die Anfangswölbung der Platte 10 erleichtert wird. Durch Durchbrüche 26 und nicht gezeigte Versteifungsrippen werden die Flexibilität und das Biegeverhalten der Platte 10 geeignet gesteuert.

Eine Stelleinrichtung 28 zur Wölbungsverstellung der Platte 10 wird durch einen Bowdenzug gebildet, dessen Außenkabel 30 sich über ein Widerlager 32 am Drahtgitter 16 abstützt und dessen Innenkabel 34 mittig am oberen Rand 12 der Platte 10 eingehängt ist. Das andere Ende des Bowdenzuges ist mit einem nicht gezeigten hand- oder motorbetätigten Spannschloss verbunden.

Wenn das Spannschloss betätigt wird, so wird das Innenkabel 34 des Bowdenzuges eingezogen und somit der beweglich geführte obere Rand 12 der Platte 10 entgegen der Kraft der Schraubenfeder 22 nach oben, also vom unteren Rand 14 weg gezogen. Da die Platte 10 auf diese Weise gestreckt wird, nimmt ihre Wölbung ab, wie in Figuren 3 und 4 zu erkennen ist. Wenn die Stelleinrichtung 28 in entgegen gesetzter Richtung verstellt wird, so gibt das Innenkabel 34 nach, und die Schraubenfedern 22 ziehen die Platte 10 wieder zusammen, so dass sie wieder eine stärkere Wölbung annimmt, soweit das Innenkabel 34 des Bowdenzuges dies zulässt. Wenn der Benutzer mit dem Rücken einen Druck auf die gewölbte Platte 10 ausübt, so kann die Platte 10 entgegen der Kraft der Schraubenfedern 22 elastisch nachgeben. Das Innenkabel 34 wird dabei zugentlastet.

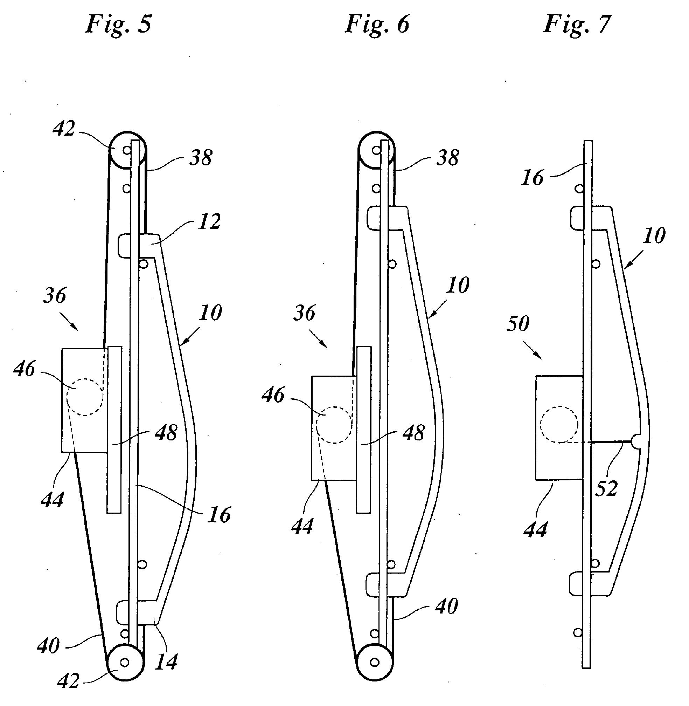

Da bei dem oben beschriebenen Ausführungsbeispiel nur der obere Rand 12 der Platte beweglich ist, kommt es bei einer Verstellung der Wölbung der Platte 10 auch zu einer geringfügigen Höhenverlagerung des Wölbscheitels. Figuren 5 und 6 zeigen eine Ausführungsform, bei der eine solche Höhenverlagerung des Wölbscheitels vermieden wird und sich darüber hinaus die Höhe des Wölbscheitels und der Platte 10 insgesamt entsprechend den individuellen Bedürfnissen des Benutzers einstellen lässt.

Bei dieser Ausführungsform sind sowohl der obere Rand 12 als auch der untere Rand 14 der Platte 10 verschiebbar an vertikalen Stäben des Drahtgitters 16 geführt. Die Stelleinrichtung 36 wird hier durch Zugseile 38 und 40 gebildet, die mit dem oberen Rand 12 bzw. dem unteren Rand 14 der Platte 10 verbunden sind und über Umlenkrollen 42 zu einer Seilwinde 44 geführt sind. Wenn eine Trommel 46 der Seilwind im Uhrzeigersinn in Figur 5 gedreht wird, so werden beide Zugseile 38, 40 auf die Trommel aufgewickelt und dadurch verkürzt, so dass die oberen und unteren Ränder der Platte 10 auseinander gezogen werden. Da sich dabei die oberen und unteren Ränder in entgegengesetzte Richtungen bewegen, bleibt der Wölbscheitel der Platte 10 im Wesentlichen stationär.

Weiterhin ist bei diesem Ausführungsbeispiel die Seilwinde 44 höhenverstellbar an einer Führung 48 geführt. Wenn die Seilwinde 44 nach unten verlagert wird, wie in Figur 6 gezeigt ist, ohne dass dabei die Trommel 46 gedreht wird, so verlagert sich die Platte 10 dementsprechend als Ganzes nach oben. Auf diese Weise kann die Höhe des Wölbscheitels eingestellt werden.

Figur 7 zeigt eine weitere Ausführungsform, bei der die Stelleinrichtung 50 ebenfalls durch eine Seilwinde 44 gebildet wird. Das Zugseil 52 greift hier jedoch am Wölbscheitel der Platte 10 an, so dass die Platte durch das Zugseil direkt auf Biegung beansprucht wird. Bei dieser Ausführungsform ist die Platte 10 so vorgewölbt, dass sie allein durch ihre Eigenelastizität in der maximal gewölbten Stellung gehalten wird. Federn, die die oberen und unteren Ränder zusammenziehen, sind deshalb hier nicht erforderlich.

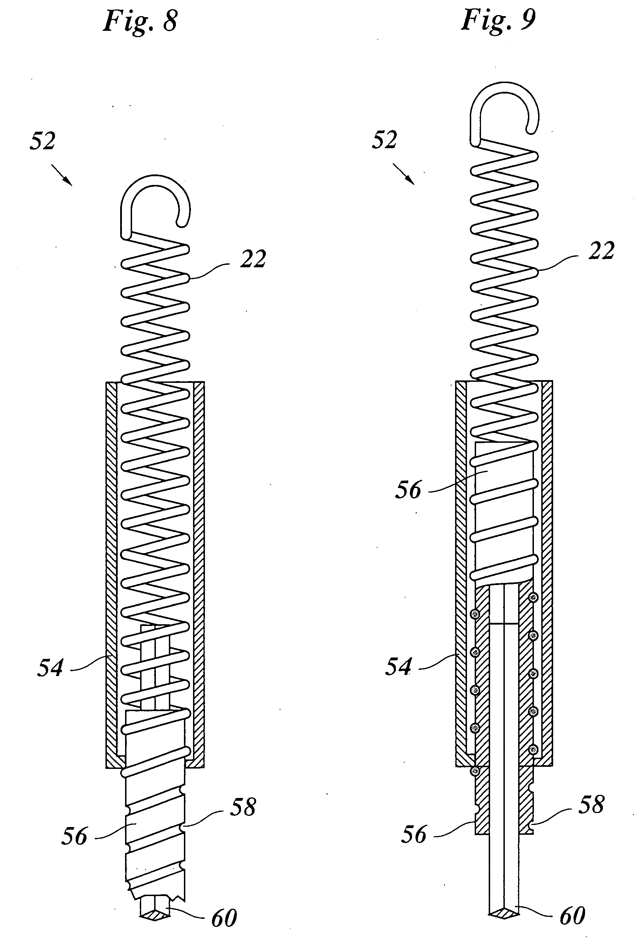

Figur 8 zeigt eine Stelleinrichtung 52, die beispielsweise bei einer Lordosenstütze, die der in Figur 1 gezeigten Ausführungsform ähnelt, zum Verstellen der Zugspannung der Schraubenfeder 22 eingesetzt werden kann. Als Beispiel soll angenommen werden, dass die oberen und unteren Ränder der Platte 10 in diesem Fall nur durch eine einzige Schraubenfeder 22 zusammengezogen werden. Das obere Ende der Schraubenfeder ist wie in Figur 1 am oberen Rand 12 der Platte 10 einzuhaken. Das untere Ende der Schraubenfeder ist jedoch am unteren Ende einer Buchse 54 verankert, die den unteren Abschnitt der Schraubenfeder mit geringem Spiel umgibt und ihrerseits am unteren Rand 14 der Platte 10 zu befestigen ist. In das untere Ende der Buchse 54 taucht eine Spindel 56 ein, die in ihrer äußeren Umfangsfläche eine schraubenförmig verlaufende Nut 58 aufweist. Diese Nut 58 ist so tief, dass sie den Federdraht der Schraubenfeder 22 sicher aufnehmen kann, und die Spindel 56 ist so in die Schraubenfeder 22 eingeschraubt, dass der Federdraht in der Nut 58 liegt. Die Steigung der Nut 58 ist etwas größer als die Steigung der Schraubenfeder 22 im unbelasteten Zustand. Deshalb wird die Schraubenfeder 22 in dem unteren Abschnitt, in dem die Spindel 56 eingeschraubt ist, etwas gedehnt.

Die Spindel 56 ist axial verschiebbar auf einer Vierkantwelle 60 geführt, die mit einem nicht gezeigten Drehantrieb verbunden ist.

Wenn die Vierkantwelle 60 angetrieben wird, so wird die Spindel 56 gedreht, so dass sie sich tiefer in die Schraubenfeder 22 einschraubt, wie in Figur 9 gezeigt ist. Dabei nimmt der gedehnte Abschnitt der Schraubenfeder 22 zu, so dass sich die Gesamtlänge der Schraubenfeder entsprechend vergrößert. Der Drehantrieb für die Vierkantwelle 60 muss dabei die Kraft überwinden, die erforderlich ist, das untere Ende der Schraubenfeder zu dehnen. Auch diese Stelleinrichtung 52 arbeitet somit gegen die Kraft der Schraubenfeder 22 und ermöglicht es, die Wölbung der Platte 10 zu verringern. Die Buchse 54 verhindert, dass die Schraubenfeder aus der Nut 58 der Spindel herausrutscht.

In Figuren 8 und 9 ist die Schraubenfeder 22 jeweils im unbelasteten Zustand dargestellt, so dass man die natürlichen Längen der Schraubenfeder vergleichen kann. Im eingebauten Zustand in der Lordosenstütze ist die Schraubenfeder 22 im Allgemeinen auf Dehnung beansprucht, so dass ihre Steigung grö-ßer ist als im unbelasteten Zustand. Die Steigung der Nut 58 der Spindel sollte mindestens so groß sein wie die Steigung der Schraubenfeder 22 in dem Zustand, in dem die Wölbung der Platte 10 minimal ist. In diesem Zustand kann die Schraubenfeder 22 auf ganzer Länge mit der Spindel 56 im Gewindeeingriff stehen, so dass die Schraubenfeder auf ganzer Länge fixiert wird und die Platte 10 starr gehalten wird. Es ist jedoch möglich und im Allgemeinen auch zweckmäßig, wenn die Schraubenfeder 22 auch bei kleinstmöglicher Wölbung der Platte 10 noch einen dehnbaren Längenabschnitt besitzt, der nicht mit der Spindel im Eingriff ist.

Die Tatsache, dass der dehnbare und damit federwirksame Abschnitt der Schraubenfeder 22 um so kürzer wird, je weiter die Spindel 56 eingeschraubt wird und je stärker somit die Platte 10 gestreckt wird, hat den willkommenen Nebeneffekt, dass die Schraubenfeder 22 mit abnehmender Wölbung der Platte 10 härter wird. Wenn die Platte 10 sehr weit vorgewölbt ist, verhält sich die Feder weich, da praktisch ihre gesamte Länge federwirksam ist, so dass die Platte 10 dem durch den Rücken des Benutzers ausgeübten Druck leicht nachgeben kann. Wenn die Platte weniger stark gewölbt ist, verhält sich die Feder dagegen härter, so dass auch die Platte dem Druck des Rückens nicht so leicht nachgibt. Der Benutzer hat somit die Wahl zwischen Einstellungen, bei denen die Platte wenig gewölbt, aber relativ hart ist und Einstellungen, bei denen die Platte stärker gewölbt, dafür jedoch nachgiebiger ist.

Generell ist zu der in Figuren 8 und 9 gezeigten Stelleinrichtung zu bemerken, dass das Funktionsprinzip dieser Stelleinrichtung nicht nur für Zugfedern, sondern auch für Druckfedern verwendbar ist. Ebenso kann die Steigung der Spindel auch kleiner sein als die Steigung der Schraubenfeder, so dass sich die Schraubenfeder beim weiteren Einschrauben der Spindel verkürzt. Je nach Einschraubtiefe der Spindel kann sich ein und dieselbe Schraubenfeder auch mal als Zugfeder und mal als Druckfeder verhalten.

## Patentansprüche

1. Lordosenstütze mit einer wölbbaren Platte (10) und einer Stelleinrichtung (28; 36; 50; 52) zum Verstellen der Wölbung der Platte (10), **dadurch gekennzeichnet, dass** die Platte (10) elastisch in eine gewölbte Stellung vorgespannt ist und dass die Stelleinrichtung (28; 36; 50; 52) dazu ausgebildet ist, die Wölbung der Platte (10) zu verringern.

2. Lordosenstütze nach Anspruch 1, **dadurch gekennzeichnet, dass** zur elastischen Vorspannung der Platte (10) mindestens eine Zugfeder (22) vorgesehen ist, die die oberen und unteren Ränder (12, 14) der Platte zusammenzieht.

3. Lordosenstütze nach Anspruch 1 oder 2, **dadurch gekennzeichnet, dass** die Platte (10) derart vorgewölbt ist, dass sie eine gewölbte Stellung einnimmt, wenn keine äußeren Kräfte auf sie einwirken.

4. Lordosenstütze nach Anspruch 3, **dadurch gekennzeichnet, dass** die Platte (10) allein aufgrund ihrer Eigenelastizität in die maximal gewölbte Stellung vorgespannt ist.

5. Lordosenstütze nach einem der vorstehenden Ansprüche, **dadurch gekennzeichnet, dass** die Stelleinrichtung (28; 36) an mindestens einem der oberen und unteren Ränder (12, 14) der Platte (10) angreift, um die Platte in eine gestreckte Lage zu ziehen.

6. Lordosenstütze nach einem der Ansprüche 1 bis 4, **dadurch gekennzeichnet, dass** die Stelleinrichtung (50) am Wölbscheitel der Platte (10) angreift und eine Kraft in einer zur Ebene der Platte (10) senkrechten Richtung im Sinne einer Verringerung der Wölbung auf die Platte (10) ausübt.

7. Lordosenstütze nach Anspruch 2, **dadurch gekennzeichnet, dass** die Zugfeder (22) eine Schraubenfeder ist und dass die Stelleinrichtung (52) eine in die Schraubenfeder (22) einschraubbare Spindel (56) aufweist, deren Steigung von der der Schraubenfeder (22) verschieden ist.
